Europäisches Patentamt

European Patent Office

Office européen des brevets

(11) Veröffentlichungsnummer: **0 496 085 A1**

## EUROPÄISCHE PATENTANMELDUNG

(21) Anmeldenummer: **91121762.8**

(51) Int. Cl.5: **F02B 29/04**, F01P 3/20

(22) Anmeldetag: **19.12.91**

(30) Priorität: **22.01.91 DE 4101708**

(43) Veröffentlichungstag der Anmeldung:
**29.07.92 Patentblatt 92/31**

(84) Benannte Vertragsstaaten:
**DE FR GB IT NL SE**

(71) Anmelder: **MAN Nutzfahrzeuge Aktiengesellschaft**
**Dachauer Strasse 667 Postfach 50 06 20**
**W-8000 München 50(DE)**

(72) Erfinder: **Kübler, Werner, Dipl.-Ing. (FH)**
**Heilsbronner Strasse 5**
**W-8541 Kammerstein(DE)**

(54) **Brennkraftmaschine mit zweistufiger Ladeluftkühlung.**

(57) Die Erfindung bezieht sich auf eine Brennkraftmaschine mit zweistufiger Ladeluftkühlung.

Durch Ladeluftkühlung läßt sich nicht nur die Leistung erhöhen, sondern sie bietet auch die Möglichkeit die Abgaszusammensetzung in problematischen Betriebsphasen zu steuern. Erfindungsgemäß wird vorgeschlagen durch Sensoren 17, 18 die Kühlleistung des Lüfters 14 so zu beeinflussen, daß bei niedrigem Lastzustand die Kühlleistung des zweiten Wärmetauschers 12 verringert wird und/oder durch einen Sensor 16 eine Klappe 13 so gesteuert wird, daß der zweite Wärmetauscher 12 umgangen wird. Durch die Verringerung der Kühlleistung des zweiten Wärmetauschers 12 und/oder durch die Umschaltung der Klappe 13 kann die Temperatur der Ladeluft im niederen Lastzustand angehoben werden, so daß die dadurch ansteigende Brennraumtemperatur die Verbrennung verbessert, wodurch Blaurauch vermeiden und unangenehme Verbrennungsgeräusche als Folge des Zündverzugs unterdrückt werden. Außerdem wird der Leistungsbedarf des Lüfters 14 durch Drehzahlregelung verringert.

Die Erfindung bezieht sich auf eine Brennkraftmaschine gemäß dem Gattungsbegriff.

Bei luftverdichtenden Brennkraftmaschinen ist es bekannt, die Ladeluft stufenweise zu kühlen. Entsprechend der Temperatur der vom Verdichter kommenden und erwärmten Ladeluft wird diese durch zwei in Reihe geschaltete erste und zweite Wärmetauscher rückgekühlt. Der in Stromrichtung gesehen erste Wärmetauscher nach dem Verdichter wird durch Kühlwasser aus dem Kühlwasserkreislauf der Brennkraftmaschine beaufschlagt. Diesem ersten Wärmetauscher ist ein zweiter Wärmetauscher nachgeschaltet, welcher entsprechend der niedrigeren Temperatur der Ladeluft mit Kühlwasser aus einem eigenen Kühlwasserkreis durchströmt ist. Dieses Kühlwasser wird in einem mit Lüfter versehenen separaten Wärmetauscher rückgekühlt. Der gleiche Lüfter bedient auch einen Kühler des Motorkühlkreislaufes. Die beiden Wärmetauscher können durch Ventile in ihren Kühlkreisläufen zu- oder abgeschaltet werden. Eine derartige Ladeluftkühlung weist eine erhebliche Trägheit auf, da der zweite Wärmetauscher unter Zwischenschaltung eines Mediums, beispielsweise Wasser arbeitet. Wenn eine rasche Änderung der Ladelufttemperatur gewünscht ist muß zunächst die im zweiten Wärmetauscher befindliche Flüssigkeit erwärmt oder abgekühlt werden, was natürlich einer gewissen Zeit bedarf. Zur Steuerung des Verbrennungsablaufes wird aber eine rasche Änderung der Ladelufttemperatur gefordert, was mit einem Ladeluftkühler dieser Art wegen seiner thermischen Trägheit nicht geleistet werden kann (DE-PS 26 55 017).

Ausgehend von einem Ladeluftkühler gemäß dem Gattungsbegriff liegt der Erfindung die Aufgabe zugrunde, die Ladeluftkühlung trägheitsfreier zu gestalten, um die Schadstoffe und die Geräuschemission zu mindern und gleichzeitig Energie einzusparen.

Gelöst wird diese Aufgabe nach den kennzeichnenden Merkmalen des Patentanspruches 1.

Durch die direkte Abkühlung der Ladeluft im zweiten Wärmetauscher ohne Vermittlung eines Übertragungsmediums kann die Temperatur der Ladeluft einem gewünschten Sollwert nahezu verzögerungsfrei angepaßt werden. Bei Leerlauf oder Teillast kann die Temperatur der Ladeluft zur Vermeidung von Blaurauch rasch angehoben werden. Besonders vorteilhaft läßt sich die erfindungsgemäße Ladeluftkühlung zur Reduzierung der Schallemission beim schnellen Hochfahren der Brennkraftmaschine anwenden. Beim Übergang von einem niedrigen Lastzustand zu höherer Last tritt durch die relativ kühlen Brennraumwände der sogenannte Zündverzug ein, der dann durch detonationsartige Verbrennung von angesammelten Brennstoffdampf-Luftgemisch zu klopfenden Geräuschen führt.

Durch rasche Erhöhung der Ladelufttemperatur kann dieser Zündverzug unterbunden werden. Bei Annäherung an den stationären Vollastzustand kann die Ladelufttemperatur ebenso verzögerungsfrei gesenkt werden, um eine ausreichende Verbrennungsluftmasse zur Verfügung zu stellen.

Eine vorteilhafte Weiterbildung der Erfindung kann Anspruch 2 entnommen werden. Die Klappe kann in Anpassung an die Temperaturverhältnisse und in Abstimmung mit dem momentanen Betriebszustand der Brennkraftmaschine schnell und gezielt betätigt werden.

Nach Anspruch 3 können die Sensoren als Thermoschalter ausgebildet sein. Wenn die Ansprüche an die Steuerung nicht zu hoch gestellt sind ist es vorteilhaft, Thermoschalter zu verwenden, welche auf elektromagnetischem oder pneumatischem Wege die Umschaltung der Klappe vornehmen.

Eine weitere vorteilhafte Ausgestaltung kann Anspruch 4 entnommen werden. Durch die Drehzahlregelung des Lüfters kann zusätzlich die Temperatur sowohl der Ladeluft als auch des Kühlwassers beeinflußt werden. Durch die kenn feldgesteuerte Elektronik können die Temperaturen von Ladeluft und Kühlwasser auf die Betriebsparameter der Brennkraftmaschine abgestimmt werden. Gleichzeitig kann der Arbeitsaufwand für den Antrieb des Lüfters minimiert werden.

Ein Ausführungsbeispiel der Erfindung ist in einer Zeichnung dargestellt.

Eine Brennkraftmaschine 1 weist einen Turbolader 2 auf. Ein Verdichter 3 des Turboladers 2 fördert vorverdichtete Luft über eine Ladeluftleitung 4 in einen Saugrohreintritt 5. Auf dem Weg zum Saugrohreintritt 5 passiert die Ladeluft zunächst einen ersten Wärmetauscher 6, wo die Ladeluft Wärme auf das Kühlwasser überträgt. Der erste Wärmetauscher 6 ist zu diesem Zweck in einen Kühlwasserkreislauf 7 eingebunden, so daß der Wärmetauscher 6 stets vom Kühlwasser durchströmt ist. Das Kühlwasser des Kühlwasserkreislaufes 7 wird wie üblich durch eine Kühlwasserpumpe 8 umgewälzt und dabei in einem Kühler 9 rückgekühlt. Bei Absinken der Kühlwassertemperatur wird der Kühler 9 umfahren, indem ein Thermostat 10 den Weg zum Kühler 9 versperrt und das Kühlwasser über eine Bypassleitung 11 führt. Der erste Wärmetauscher 6 ist dem Verdichter 3 nachgeschaltet und wird ständig von der Ladeluft und dem Kühlwasser durchströmt. Zur weiteren Kühlung der Ladeluft ist ein zweiter Wärmetauscher 12 vorgesehen der mit dem ersten Wärmetauscher 6 in Reihe geschaltet ist und in der die Ladeluft seine Wärme unmittelbar durch Wärmetausch auf die Umgebungsluft überträgt.

Erfindungsgemäß kann der Wärmetauscher 12 zu- oder abgeschaltet werden. Zu diesem Zweck verzweigt sich die Lade-Luftleitung 4 nach dem ersten Wärmetauscher 6 in einen ersten Abschnitt 4a, welcher zum zweiten Wärmetauscher 12 führt und einen zweiten Abschnitt 4b der zum Saugrohreintritt 5 führt.

Im zweiten Abschnitt 4b ist eine Klappe 13 vorgesehen, welche durch eine Regeleinrichtung 13a umschaltbar ist und die in der gezeichneten Stellung den Weg zum Saugrohreintritt 5 freigibt, jedoch den Weg der Ladeluft über den zweiten Wärmetauscher 12 versperrt. Beim Umschalten der Klappe 13 mittels der Regeleinrichtung 13a wird der unmittelbare Weg der Ladeluft zum Saugrohreintritt 5 versperrt und die Ladeluft muß den zweiten Wärmetauscher 12 durchströmen und wird dort weiter zurückgekühlt. Der Kühler 9 und der zweite Wärmetauscher 12 werden durch einen Lüfter 14 mit Kühlluft versorgt. Der Lüfter 14 wird von einer nicht dargestellten Kurbelwelle ausgehend angetrieben. Er kann durch eine zwischengeschaltete, in ihrer Drehzahl regelbare Kupplung, beispielsweise eine Viskosekupplung 15, in seiner Kühlleistung stufenlos geregelt werden.

Zur Regelung der Ladeluft- und der Feinregelung der Kühlwassertemperatur sind Sensoren 16, 17 und 18 vorgesehen. Eine zusätzliche Beeinflussung und grobe Regelung der Kühlwassertemperatur kann natürlich auch wie sonst üblich über den Thermostat 10 erfolgen.

Die erfindungsgemäße Vorrichtung zur Ladeluftkühlung erlaubt die gezielte Beeinflussung des Verbrennungsablaufes und der daraus resultierenden Abgaswerte und des Geräuschverhaltens. Beim plötzlichen Übergang von einem niederen zu einem hohem Lastzustand ist zwischenzeitlich eine erhöhte Ladelufttemperatur erwünscht, um den Zündverzug - bedingt durch die kalten Brennraumwände - zu umgehen.

Um dies zu erreichen wird durch Ist- und Sollwertvergleich vom ersten Sensor 16 und einer nicht dargestellten kennfeldgesteuerten Elektronik die Klappe 13 gesteuert. Während des Überganges vom einem niederen zu einem hohen Lastzustand ist die Klappe 13 in der gezeichneten Stellung, so daß der zweite Wärmetauscher 12 umgangen wird. Die vom Verdichter 3 kommende Ladeluft durchströmt den ersten Wärmetauscher 6 und wird zunächst durch das Kühlwasser vorgewärmt und direkt dem Saugrohreintritt 5 zugeführt. Dadurch wird das Temperaturniveau im Brennraum angehoben. Dies reduziert den Zündverzug und als dessen Funktion die Verbrennungsgeräuschemission ebenso, wie den Blaurauch. Bei Annäherung ein einen stationären Vollastzustand ist eine niedrige Ladelufttemperatur erwünscht. Im Zusammenspiel von erstem Sensor 16 mit der kennfeldgesteuerten Elektronik wird die Klappe 13 aus der gezeichneten Stellung heraus umgeschaltet, so daß der Weg der Ladeluft auch über den zweiten Wärmetauscher 12 frei wird. Neben der Rückkühlung der nun mit erhöhter Temperatur vom Verdichter 3 gelieferten Ladeluft im ersten Wärmetauscher 6 wird die Ladeluft im zweiten Wärmetauscher 12 weiter abgekühlt und dem Saugrohreintritt 5 zugeführt. Da die Wärme der Ladeluft erfindungsgemäß im zweiten Wärmetauscher 12 direkt durch Wärmeübertragung an die Umgebungsluft abgegeben wird arbeitet die Regelung der Temperatur sehr trägheitsfrei, so daß sie sich ändernden Motorparametern rasch anpassen kann.

Bei Zwischenschaltung eines Übertragungsmediums ist das wegen der Wärmeträgheit dieses Mediums nicht möglich. Erst durch das Zusammenwirken der Klappe 13 zur Umfahrung des zweiten Wärmetauscher 12 und durch die direkte Übertragung der Ladeluftwärme an die Umgebungsluft mittels des zweiten Wärmetauscher 12 wird der erwünschte trägheitsarme Betrieb möglich.

Erfindungsgemäß wird auch dank des drehzahlgeregelten Lüfters 14 Energie eingespart. Die Drehzahl des Lüfters 14 kann durch einen zweiten und dritten Sensor 17, 18 im Kühlwasserkreislauf 7, bzw. nach dem zweiten Wärmetauscher (12) im Zusammenwirken mit der kennfeldgesteuerten Elektronik geregelt werden.

Die Abmessungen des Kühlers 9 und des zweiten Wärmetauschers 12 sind aufeinander abzustimmen, so daß bei Nennlast der Brennkraftmaschine die für beide Kreise geforderte Kühlwirkung erzielt wird.

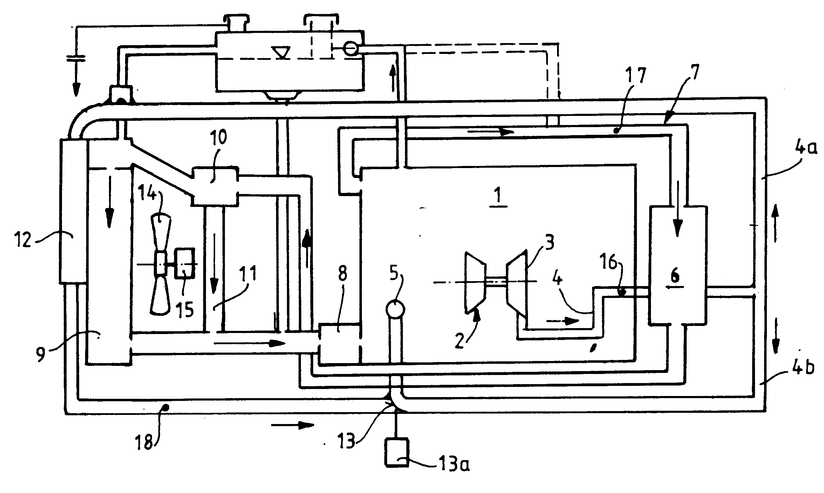

**Patentansprüche**

1. Brennkraftmaschine mit zweistufiger Ladeluftkühlung, wobei die Ladeluft zunächst in einem ersten Wärmetauscher rückgekühlt wird der mit einem Kühlmittel höheren Temperaturniveaus beaufschlagt wird und anschließend die Ladeluft einen in Reihe geschalteten zweiten Wärmetauscher durchströmt der mit einem Kühlmittel von niedrigerem Temperaturniveau beaufschlagt wird, dadurch gekennzeichnet, daß der erste Wärmetauscher (6) in einen Kühlwasserkreislauf (7) eingebunden ist, daß der zweite Wärmetauscher (12) unmittelbar mit Luft als Kühlmittel beaufschlagt wird welche von einem Lüfter (14) geliefert wird, wobei der Lüfter (14) durch zweite und dritte Sensoren (17 und 18) im Kühlwasserkreislauf (7), bzw. nach dem zweiten Wärmetauscher (12) drehzahlregelbar ist, und daß zwischen dem ersten und zweiten Wärmetauscher (6, 12) eine durch einen ersten Sensor (16) in einer Ladeluftleitung (4) gesteuerte und durch eine Regeleinrichtung (13a) umschaltbare Klappe (13) vorgesehen ist, welche es erlaubt, den zweiten Wärmetauscher (12) zu umgehen.

2. Brennkraftmaschine nach Anspruch 1, dadurch gekennzeichnet, daß die Regeleinrichtung (13a) als eine kennfeldgesteuerte Elektronik ausgebildet ist, und daß diese Elektronik durch einen von Ladeluft beaufschlagten ersten Sensor (16) derartig beeinflußbar ist, daß in vorgegebenen Betriebszuständen der Brennkraftmaschine, wie z. B. beim Hochfahren, der zweite Wärmetauscher (12) durch Umschalten der Klappe (13) umgangen wird.

3. Brennkraftmaschine nach Anspruch 1, dadurch gekennzeichnet, daß die Sensoren (16, 17, 18) als Thermoschalter ausgebildet sind.

4. Brennkraftmaschine nach Anspruch 1, dadurch gekennzeichnet, daß die Drehzahl des Lüfters (14) durch eine regelbare Kupplung, beispielsweise eine Viskosekupplung (15) erfolgt, welche zwischen einer Kurbelwelle und dem Lüfter (14) eingeschaltet ist und welche durch eine kennfeldgesteuerte Elektronik regelbar ist, wobei die Elektronik durch die Sensoren (17, 18) angesteuert wird.

**Europäisches Patentamt**

# EUROPÄISCHER RECHERCHENBERICHT

Nummer der Anmeldung

EP  91 12 1762

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,A | US-A-5 036 668 (HARDY)<br>* das ganze Dokument * | 1 | F02B29/04<br>F01P3/20 |
| A | FR-A-2 364 340 (MTU)<br>* Seite 2, Zeile 29 - Seite 3, Zeile 24; Abbildung * | 1 | |
| A | US-A-4 317 439 (EMMERLING)<br>* Spalte 3, Zeile 43 - Spalte 5, Zeile 27; Abbildung 1 * | 1 | |
| A | FR-A-2 308 785 (ETAT FRANCAIS)<br>* Seite 7, Zeile 4 - Zeile 20; Abbildung 1 * | 1,4 | |
| A | GB-A-2 055 963 (SOCIETE ALSACIENNE)<br>* Zusammenfassung; Abbildung * | 1 | |
| D,A | DE-C-2 655 017 (KLÖCKNER-HUMBOLDT-DEUTZ) | | |

| | |
|---|---|
| | **RECHERCHIERTE SACHGEBIETE (Int. Cl.5)**<br><br>F02B<br>F01P |

Der vorliegende Recherchenbericht wurde für alle Patentansprüche erstellt

| Recherchenort | Abschlußdatum der Recherche | Prüfer |
|---|---|---|
| DEN HAAG | 23 MAERZ 1992 | SIDERIS MARIOS |